(19) Europäisches Patentamt
European Patent Office
Office européen des brevets

(11) **EP 3 413 027 B1**

(12) **EUROPEAN PATENT SPECIFICATION**

(45) Date of publication and mention
of the grant of the patent:
**24.02.2021 Bulletin 2021/08**

(51) Int Cl.:
**G01M 5/00** *(2006.01)* **G01H 1/00** *(2006.01)*
**G01M 13/04** *(2019.01)*

(21) Application number: **18175720.4**

(22) Date of filing: **04.06.2018**

(54) **COMPLEX MACHINE TOOL HAVING FAILURE PREDICATION FUNCTION**

KOMPLEXE WERKZEUGMASCHINE MIT FEHLERVORAUSSAGEFUNKTION

MACHINE-OUTIL COMPLEXE AYANT UNE FONCTION DE PREDICTION DE DEFAUT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2017 JP 2017112919**

(43) Date of publication of application:
**12.12.2018 Bulletin 2018/50**

(73) Proprietor: **Nakamura-Tome Precision Industry Co., Ltd**
**Hakusan, Ishikawa 920-2195 (JP)**

(72) Inventor: **NAKANISHI, Ken-ichi**
**Hakusan, Ishikawa 920-2195 (JP)**

(74) Representative: **Wunderlich & Heim**
**Patentanwälte**
**Partnerschaftsgesellschaft mbB**
**Irmgardstrasse 3**
**81479 München (DE)**

(56) References cited:
**US-A1- 2008 033 695    US-A1- 2008 234 964**

## Description

The present invention relates to a complex machine tool having a failure prediction function based on machine learning.

Japanese Patent No. 5067121 discloses an example of a method of determining and diagnosing abnormality of a bearing and a sliding member. This method includes detecting vibrations due to relative rotation, converting the vibrations into an electrical signal, performing an envelope process, a filter process, and the like on the electrical signal, and comparing the resultant electrical signal with a predetermined threshold.

Japanese Patent No. 3846560 discloses an example of an abnormality diagnosis method based on whether a frequency spectrum of an envelope signal includes a frequency component having a peak at or higher than a reference level in a low frequency band.

Unfortunately, these abnormality determination/diagnosis methods are based on temporary signal data and thus are susceptible to disturbance. Accordingly, the methods have room for improvement in terms of reliability. The document US 2008/0234964 A1 discloses an abnormality diagnostic apparatus for a railway vehicle or a windmill, wherein the failure of each part of a bearing is determined. A similar system is known from US 2008/0033695 A1.

An object of the present invention is to provide a complex machine tool featuring failure prediction with excellent robustness and enabling inspection or part replacement to be performed before a failure occurs.

The object is solved by a complex machine tool with the features of claim 1. Preferred embodiments are cited in the depending claims.

The complex machine tool not only includes a tool having a combination of functions of a numerically controlled (NC) lathe, a machining center, and the like, but also includes a single machine having functions of various machine tools.

The sensor information may include vibration information (such as acceleration, speed, displacement, and sound) as well as information on load change and the like.

For example, the sensor information is acceleration information and the amplitude spectrum is an amplitude spectrum of a power spectrum density (PSD).

For example, an example of the failure prediction target part includes a rotation mechanism section such as a bearing or a ball screw and the like.

In the present invention, the machine learning unit acquires sensor information on a predetermined section or part of the complex machine tool obtained until the point of determination, as a criteria for failure prediction. Thus, highly reliable failure prediction can be achieved.

A sensor is attached to each of a plurality of sections, and which of frequency bands of interest involves a spectrum with abnormality is identified by using amplitude spectrum information obtained by the sensors. Thus, which of the parts of the complex machine tool needs to be inspected can be recognized.

A section of the complex machine tool to which the present invention is applied includes a bearing of a spindle that is used for holding a workpiece with a chuck and is a target of rotation control, a bearing for a part with which a tool is rotatably held by a turret, a spindle, or the like, a ball screw used for controlling sliding of a table or the like, and the like.

### BRIEF DESCRIPTION OF THE DRAWINGS

FIG. 1 illustrates a turning center with a single spindle that is an example of a complex machine tool to which the present invention is applied.
FIG. 2 illustrates a turning center with opposed spindles that is another example of the complex machine tool to which the present invention is applied.
FIG. 3 illustrates a bearing that is an example of a failure prediction target part.
FIG. 4 illustrates a ball screw that is another example of the failure prediction target part.
FIG. 5 is a block diagram of a failure prediction device provided to the complex machine tool.
FIG. 6 is a flowchart illustrating a learning-evaluation cycle for failure prediction.
FIG. 7 schematically illustrates a spectral line graph.

### DESCRIPTION OF EXEMPLARY EMBODIMENTS

Exemplary embodiments of the invention are described in detail below. Note that the following embodiments do not in any way limit the scope of the invention defined by the claims laid out herein. Note also that all of the elements described in connection with the following embodiments should not necessarily be taken as essential elements of the invention.

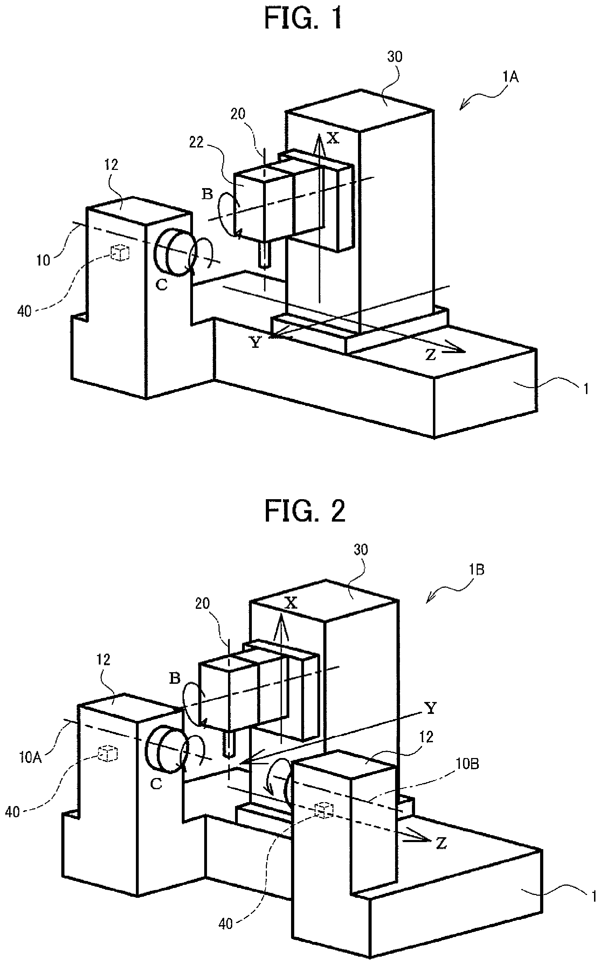

FIG. 1 illustrates a turning center 1A with a single spindle. FIG. 2 illustrates a turning center 1B with two opposed spindles on L and R sides. In FIGs. 1 and 2, a workpiece is held and rotated by a C-axis controlled spindle 10 (10A or 10B). A tool attached to a tool spindle 20 can translate along X, Y, and Z axes that are orthogonal to each other (cross each other in a broader sense), and can be rotated abound a B axis.

The spindle 10 is rotatably supported by a headstock 12, the spindle 10A is rotatably supported by a headstock 12L, and the spindle 10B is rotatably supported by a headstock 12R. The tool spindle 20 is rotatably supported by a tool post 22. A movable carriage 30 that can translate in the Y and Z axes with respect to a base 1 is provided. The tool post 22 is supported by the movable carriage 30 to be movable along the X axis with respect to the movable carriage 30.

In an example illustrated in FIG. 1, the headstock 12 incorporates a sensor unit 40 for example. In FIG. 2, the sensor unit 40 is similarly provided in each of the headstocks 12R and 12L. The sensor unit 40 may include an acceleration sensor that detects acceleration serving as an example of vibration information. The sensor unit 40 may include a microphone that detects sound serving as an example of the vibration information, in addition to or instead of the acceleration sensor. According to the invention, the sensor unit 40 includes a load detection sensor that detects a load on a vibrating source such as the spindle 10 (10A or 10B), in addition to the senor that detects the vibration information.

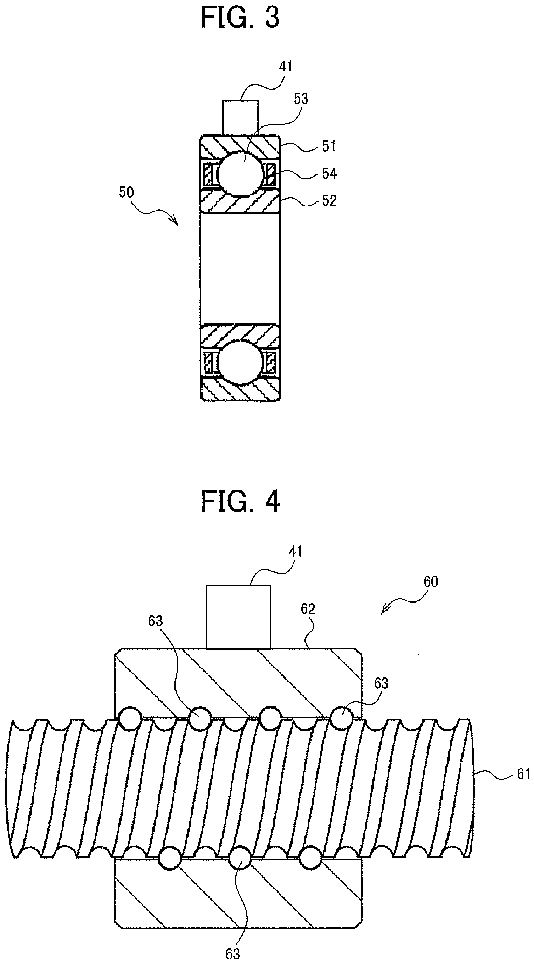

FIG. 3 illustrates a bearing 50 (an example of a failure prediction target part) that is provided to the headstock 12, 12R, or 12L and rotatably supports the spindle 10, 10R, or 10L. The bearing 50 includes an outer ring 51 having an annular shape, an inner ring 52 having an annular shape, a plurality of rolling elements 53 that can be in rolling contact with the outer ring 51 and the inner ring 52, and a holder 54 that holds the rolling elements 53. An acceleration sensor 41 that is a positioning element of the sensor unit 40 can be provided to a bearing housing 55 incorporating the bearing 50 as illustrated in FIG. 3. The detection axis of the acceleration sensor 41 is not limited to a particular orientation, and is preferably orientated to achieve high detection sensitivity.

The sensor unit 40 may be provided to the base 1 and/or the movable carriage 30. The base 1 and the movable carriage 30 are provided with a ball screw 60 (an example of a failure prediction target part) illustrated in FIG. 4 for movement along the X, Y, and Z axes. The ball screw 60 includes a ball screw shaft 61, a nut 62, and a plurality of balls (steel balls) 63 for rolling. For example, the acceleration sensor 41 that is an element of the sensor unit 40 can be provided to a nut attachment 64 to which the nut 62 is attached as illustrated in FIG. 4. Also in this configuration, the acceleration sensor 41 preferably has the detection axis orientated to achieve high detection sensitivity. In FIG. 3 and FIG. 4, the microphone may be provided instead of the acceleration sensor 41.

For example, the acceleration sensor and/or the microphone is configured to be capable of measuring and inputting vibration information within a frequency band between 50 Hz and 2 kHz once in every 0.2 msec.

For example, the acceleration sensor may have the following specification.

- Sensitivity: 1.0 mV (m/s$^2$)
- A/D resolution: 16 bit or more
- Built-in preamplifier
- Maximum acceleration: 200 m/s$^2$ or higher

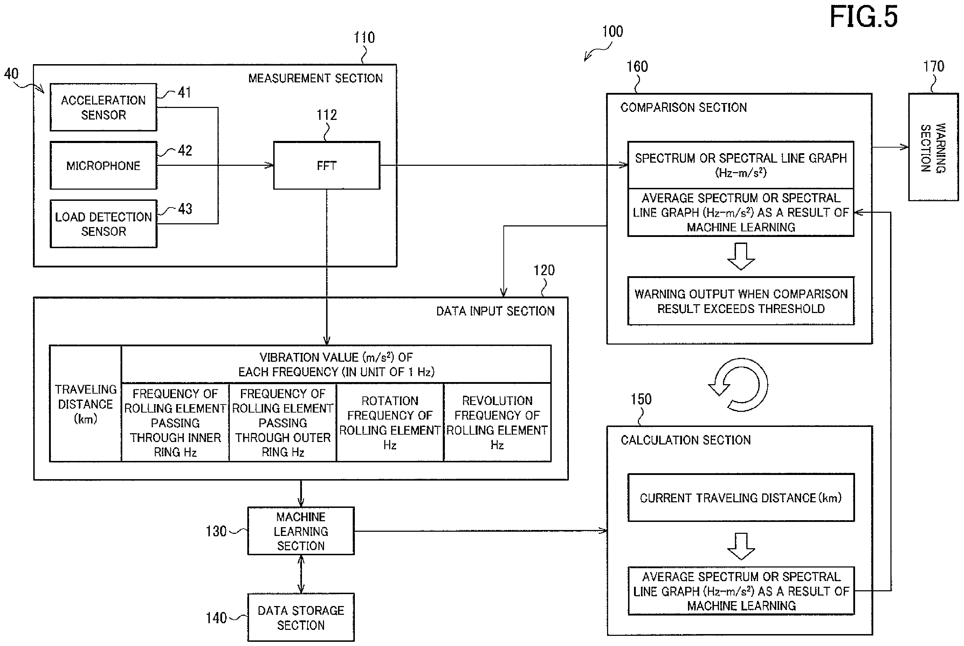

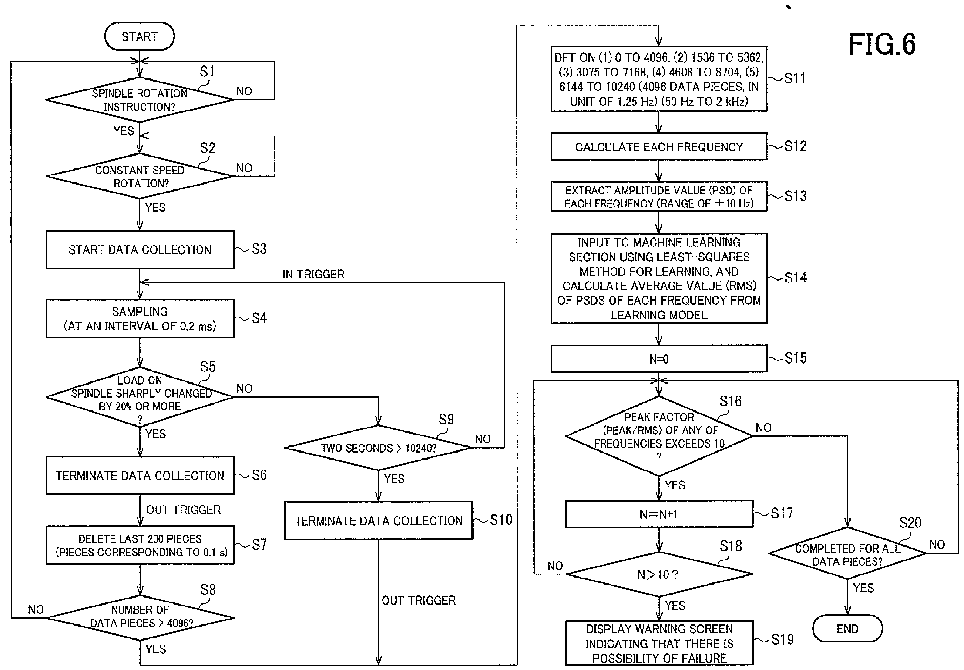

FIG. 5 is a block diagram of a failure prediction device 100 provided to the complex machine tool 1A and 1B. FIG. 6 is a flowchart illustrating an operation cycle of the failure prediction device 100. The failure prediction device 100 illustrated in FIG. 5 may include a measurement section 110, a data input section 120, a machine learning section 130, a data storage section 140, a calculation section 150, a comparison section 160, and a warning section 170. Note that the data input section 120, the data storage section 140, and the calculation section 150 may be omitted.

The measurement section 110 includes the sensor unit 40 and a Fast Fourier Transform (FFT) analyzer 111 that performs FFT analysis based on an output from the sensor unit 40. After a spindle rotation instruction has been output (step 1 in FIG. 6), while a workpiece held by the spindle 10, 10A, and 10B is not being processed, and after the spindle 10, 10A, and 10B (vibrating source) has started to rotate at a constant speed (step 2), the acceleration sensor 41 or a microphone 42 in the sensor unit 40 starts data collection in response to IN trigger (step 3),. The data collection is performed for at least two seconds and at an interval of 0.2 msec, for example (step 4).

When a load detection sensor 43 in the sensor unit 40 detects that the workpiece has been started to be processed or the like, based on change in a spindle load (for example, when the spindle load is change by 20% or more) (YES in step 5), the acceleration sensor 41 or the microphone 42 terminates the data collection in response to OUT trigger (step 6). In such a case, last 200 pieces of data, corresponding to data collected within 0.1 s, can be deleted (step 7). When the number of data pieces is smaller than a predetermined lower limit, which is 4096 for example (NO in step 8), steps 1 to 7 are repeated. When a result of determination in step 8 is YES, the process proceeds to step 11 and an FFT analyzer 112 performs the FFT analysis. When the change in the spindle load is less than 20% in step 5 in FIG. 6, data can be further be collected. More specifically, when the number of data pieces does not exceed a predetermined upper limit, which is 10240 for example (NO in step 9), the process proceeds to step 4 and the data collection continues. Then, when the number of data pieces exceeds the upper limit value (10240) (YES in step 9), the data collection is terminated (step 10) as in step 6.

Next, the FFT analyzer 112 illustrated in FIG. 5 performs the FFT analysis (step 11). For example, the FFT analyzer 112 can perform frequency analysis on 4096 pieces of data in a unit of 1.25 Hz in the frequency band between 50 Hz and 2 kHz for example.

A frequency of interest for each failure factor of each part of the bearing 50 illustrated in FIG. 3 for example has been known to be obtainable by the following formulae. Thus, the FFT analyzer 112 can perform the FFT analysis in such a manner that the frequency bands of interest are included.

A frequency of interest $f_{inner}$ in a case where scratch or peel occurs on a race surface of the inner ring 52 is obtained as follows as a frequency of the rolling element 53 passing through the inner ring 52:

$$f_{inner} = \frac{Zf_0}{2}\left\{1 + \frac{d}{D}\cos\alpha\right\},$$

where Z is the number of rolling elements 53, f0 is a rotation frequency (Hz) of the inner ring 52, d is a diameter (mm) of the rolling element 53, D is a diameter (mm) of a pitch circle of the rolling element 53, and $\alpha$ is a contact angle (°).

A frequency of interest $f_{outer}$ in a case where scratch or peel occurs on a race surface of the outer ring 51 is obtained as follows as a frequency of the rolling element 53 passing through the outer ring 51:

$$f_{outer} = \frac{Zf_0}{2}\left\{1 - \frac{d}{D}\cos\alpha\right\}.$$

A frequency of interest $f_{ball}$ in a case where scratch or peel occurs on the rolling element 53 is obtained as follows as a rotation frequency of the rolling element 53:

$$f_{ball} = \frac{f_0 D}{2d}\left\{1 - \left(\frac{d}{D}\right)^2 \cos^2\alpha\right\}.$$

A frequency of interest $f_{element}$ in a case where a defect occurs on the holder 54 is obtained as follows as a revolution frequency of the rolling element 53:

$$f_{element} = \frac{f_0}{2}\left\{1 - \frac{d}{D}\cos\alpha\right\}.$$

A frequency of interest of each part of the ball screw 60 illustrated in FIG. 4 is known to be obtainable with the following formulae. Thus, the FFT analysis may be performed in such a manner that the frequency bands of interest are included.

A frequency of interest fb in a case where a defect occurs in the ball 63 is obtained as follows as a rotation frequency of the ball 63:

$$2nf_b = 2n\left(\frac{d_m}{D_w \cdot \cos^2\alpha \cdot \cos^2\beta} - \frac{D_w \cdot \cos^2\alpha \cdot \cos^2\beta}{d_m}\right)\frac{f_n}{2},$$

where dm is a pitch circle diameter (mm) of the ball 63, Dw is a diameter (mm) of the ball 63, $\alpha$ is a contact angle, $\beta$ is a lead angle, and fn is a rotation frequency of the ball screw shaft 61.

A frequency of interest fn in a case where a defect occurs in the ball screw shaft 61 or the nut 62 is obtained as follows as a unique frequency of the ball screw shaft 61 or the nut 62:

$$f_n = \frac{k_n^2}{2\pi}\sqrt{\frac{EI}{\rho AL^4}}$$,

where kn is a constant, E is a Young's modulus of the ball screw shaft 61 or the nut 62, I is a moment of inertia of area of the ball screw shaft 61 or the nut 62, A is a cross-sectional area of the ball screw shaft 61 or the nut 62, and L is a length of the ball screw shaft 61 or the nut 62.

The natural frequency fn of the ball screw shaft 61 is obtained with a moment of inertia of area $I_{screw}$ of the ball screw shaft 61 described below substituted with the moment of inertia of area I in the formula described above:

$$I_{screw} = \frac{1}{64}\pi(d_s - D_W)^4$$.

Similarly, the natural frequency fn of the nut 62 is obtained with a moment of inertia of area $I_{screw}$ of the nut 62 described below substituted with the moment of inertia of area I in the formula described above:

$$I_{nut} = \frac{1}{64}\pi\{d_n^4 - (d_s + D_w)^4\}$$,

where ds is a screw diameter and dn is a nut outer diameter.

The FFT analyzer 110 illustrated in FIG. 5 performs frequency analysis while focusing on the frequencies of interest of the various modes obtained with the formulae described above (step 11 and 12). For example, the FFT analyzer 112 performs Discrete Fourier Transformation (DFT) based on discrete collected data including 4096 pieces of data as illustrated in step 11 in FIG. 6.

The FFT analyzer 112 can extract an amplitude value (amplitude spectrum) that is a range of ±10 Hz (hereinafter, referred to as a frequency band of interest) from each of the frequency of interest serving as the center frequency, by performing the DFT (step 13). The amplitude value indicates vibration acceleration ($m/s^2$). The FFT analyzer 112 can obtain a Power Spectrum Density (PSD) of the acceleration, as the amplitude value. The PSD is a power spectrum per unit frequency (1 Hz), and thus a unit of the PSD is $(m/s^2)^2/Hz$.

The amplitude value (PSD) per 1 Hz extracted by the FFT analyzer 112 is input to the data input section 120 and the comparison section 160 illustrated in FIG. 5. In the data input section 120, the PSD of each of the frequency bands of interest is associated with a traveling distance (km), so that the time of the data can be identified. The traveling distance is obtained by converting an operation history of the bearing 50 that is a failure prediction target part into a distance.

The machine learning section 130 illustrated in FIG. 5 uses data input through the data input section 120 as learning data (step 14). For example, the machine learning section 130 determines whether or not a learning model using a least-squares method is appropriately applicable to new data, and performs relearning. The machine learning section 130 or the calculation section 150 can calculate an average spectrum an example of which includes Root Mean Square (RMS) of the PSD, for each frequency band of interest from the learning model (step 14). The learning data supplied from the data input section 120 is stored and accumulated in the data storage section 140.

The comparison section 160 illustrated in FIG. 5 compares the RMS value of each frequency band of interest obtained through the machine learning with the spectrum of each frequency band of interest obtained by the FFT analyzer 112. Here, the comparison section 160 may compare only the peak value in each of the plurality of spectrums of each frequency band of interest obtained by the FFT analyzer 112 with the RMS value of each frequency band of interest obtained by the machine learning.

In step 15 in FIG. 6, N is set to be 0 that is an initial value. In step 16 in FIG. 6, the comparison section 160 determines whether or not a peak/RMS of each frequency band of interest exceeds a threshold (10, for example). When the peak/RMS exceeds beyond the threshold (YES in step 15), the count value N is changed to N+1 (step 17). When the count value N exceeds 10 (YES in step 18), the warning section 170 illustrated in FIG. 5 outputs a warning indicating a possibility of a failure. The warning section 170 can output the warning by screen display or by sound, an indicator, or the like. When there are a plurality of frequency bands of interest, the warning section 170 can output the warning in such a manner that which one of the frequency bands of interest (or a failure prediction target part corresponding to the frequency of interest) involves a possibility of failure can be recognized.

When a result of the determination in step 16 in FIG. 6 is NO, whether or not the determination in step 16 has been performed on all the pieces of data is determined (step S20). When a result of the determination in step 18 or 20 is NO, the process returns to step 16. When a result of the determination in step 20 is YES, the process is terminated.

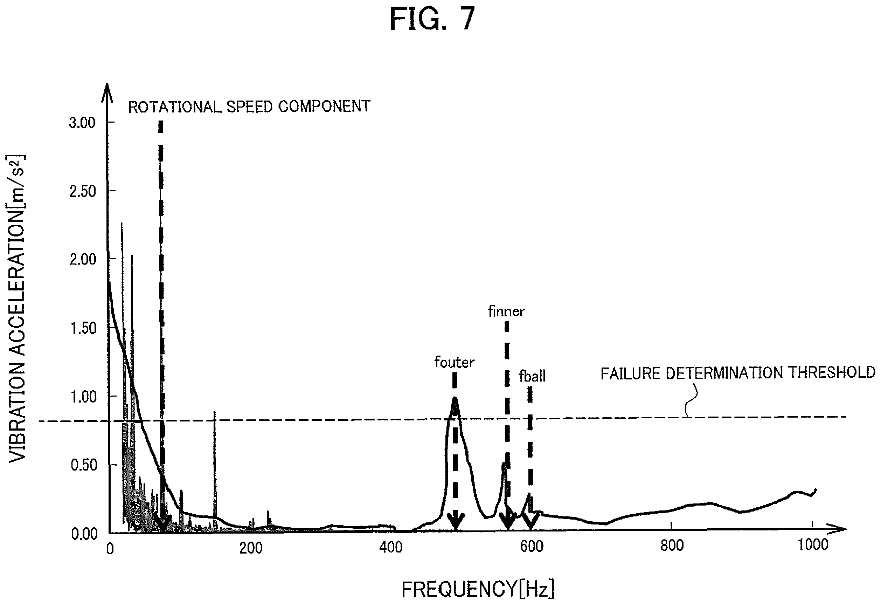

FIG. 7 is a spectral line graph schematically illustrating the failure prediction. FIG. 7 illustrates three frequencies of interest $f_{outer}$, $f_{inner}$, and $f_{ball}$, and illustrates a state where the spectrum corresponding to the frequency of interest $f_{outer}$ exceeds a failure determination threshold.

As described above, with the present embodiment, a part where a failure might occur can be predicted, with data input to the machine learning unit and with the transition of a peak value of a vibration spectrum predicted based on learned learning model.

When failure is predicted, a warning signal may be displayed on a screen or warning may be issued with sound, an indicator, or the like.

This learning-evaluation cycle can be applied to various parts such as a ball screw illustrated in FIG. 4.

**Claims**

1.  A complex machine tool having a failure prediction function comprising:

    a spindle (10, 10A ,10B) adapted to hold and rotate a workpiece;
    a vibration part (50) that is a failure prediction target part being a rotation mechanism section such as a bearing or a ball screw;
    a tool spindle (20) adapted to hold a tool that processes the workpiece; and
    a sensor unit (40) comprising
    a sensor (41) attached to the vibration part (50), and
    a load detection sensor (43) adapted to detect that the workpiece has been started to be processed based on a change in a spindle load;
    wherein the complex machine tool includes:

    an FFT analysis unit (112) adapted to perform frequency analysis on sensor information acquired by the sensor (41) while the workpiece held by the spindle (10, 10A, 10B) is not being processed by the tool and while the vibration part (50) is vibrated by the spindle (10, 10A, 10B) as a vibrating source in a constant speed state;
    a machine learning unit (130) adapted to acquire an amplitude spectrum of a frequency band of interest obtained by the frequency analysis performed by the FFT analysis unit (112), and calculate an average amplitude spectrum of the frequency band of interest based on a learned leaning model; and
    a comparison unit (160) adapted to compare the amplitude spectrum of the frequency band of interest obtained by the FFT analysis unit (112) with the average amplitude spectrum of the frequency band of interest obtained by the machine learning unit (130).

2.  The complex machine tool having a failure prediction function as defined in claim 1, the comparison unit (160) comparing a peak value in the amplitude spectrum of the frequency band of interest obtained by the FFT analysis unit (112) with the average amplitude spectrum of the frequency band of interest obtained by the machine learning unit (130) .

3.  The complex machine tool having a failure prediction function as defined in claim 1 or 2, the sensor information being acceleration information, the amplitude spectrum being an amplitude spectrum of a power spectrum density.

4.  The complex machine tool having a failure prediction function as defined in claim 3, the machine learning unit (130) performing machine learning with a learning model for calculating the average amplitude spectrum of the frequency band of interest by using a least-squares method.

5.  The complex machine tool having a failure prediction function as defined in claim 4, the average amplitude spectrum being a root mean square of the frequency band of interest.

**6.** The complex machine tool having a failure prediction function as defined in any one of claims 1 to 5, the frequency band of interest including a first frequency band of interest and a second frequency band of interest different from each other in a center frequency.

**7.** The complex machine tool having a failure prediction function as defined in any one of claims 1 to 6 further comprising a warning unit (170) outputting failure prediction information based on a comparison result obtained by the comparison unit (160).

**8.** The complex machine tool having a failure prediction function as defined in claim 7 further comprising a warning unit (170) outputting failure prediction information based on a comparison result obtained by the comparison unit, with the first frequency band of interest and the second frequency band of interest distinguished from each other.

**Patentansprüche**

**1.** Komplexe Werkzeugmaschine mit einer Fehlervoraussagefunktion mit:

- einer Spindel (10, 10A, 10B), welche zum Halten und Drehen eines Werkstücks ausgebildet ist,
- einem Vibrationsteil (50), welches ein Fehlervorhersage-Zielteil ist, welches ein Rotationseinrichtungselement ist, wie ein Lager oder eine Kugelumlaufspindel,
- einer Werkzeugspindel (20), welche zum Halten eines Werkzeuges ausgebildet ist, welches das Werkstück bearbeitet, und
- einer Sensoreinheit (40) umfassend:

-- einen Sensor (41), welcher an dem Vibrationsteil (50) angebracht ist, und
-- einen Belastungsermittlungssensor (43), welcher ausgebildet ist, basierend auf einer Änderung in einer Spindelbelastung zu erfassen, wenn die Bearbeitung des Werkstücks begonnen wurde,

wobei die komplexe Werkzeugmaschine aufweist:

- eine FFT-Analyseeinheit (112), welche zum Durchführen einer Frequenzanalyse anhand von durch den Sensor (41) erfassten Sensorinformationen ausgebildet ist, während das von der Spindel (10, 10A, 10B) gehaltene Werkstück durch das Werkzeug nicht bearbeitet wird und während das Vibrationsteil (50) durch die Spindel (10, 10A, 10B) als eine Vibrationsquelle in einem konstanten Drehzahlzustand in Vibration versetzt wird,
- eine Maschinenlerneinheit (130), welche zum Erfassen eines Amplitudenspektrums eines interessierenden Frequenzbandes ausgebildet ist, welches durch die von der FFT-Analyseeinheit (112) durchgeführte Frequenzanalyse erhalten wird, und zum Berechnen eines Durchschnittsamplitudenspektrums des interessierenden Frequenzbandes anhand eines Lernmodells ausgebildet ist, und
- eine Vergleichseinheit (160), welche zum Vergleichen des Amplitudenspektrums des interessierenden Frequenzbandes, welches von der FFT-Analyseeinheit (112) erhalten ist, mit dem Durchschnittsamplitudenspektrum des interessierenden Frequenzbandes ausgebildet ist, welches von der Maschinenlerneinheit (130) beschafft ist.

**2.** Komplexe Werkzeugmaschine mit einer Fehlervoraussagefunktion nach Anspruch 1, wobei die Vergleichseinheit (160) einen Spitzenwert in dem Amplitudenspektrum des interessierenden Frequenzbandes, welches durch die FFT-Analyseeinheit (112) beschafft wird, mit einem Durchschnittsamplitudenspektrum des interessierenden Frequenzbandes vergleicht, welches durch die Maschinenlerneinheit (130) beschafft wird.

**3.** Komplexe Werkzeugmaschine mit einer Fehlervoraussagefunktion nach Anspruch 1 oder 2, wobei die Sensorinformation eine Beschleunigungsinformation und das Amplitudenspektrum ein Amplitudenspektrum einer Energiespektrumsdichte ist.

**4.** Komplexe Werkzeugmaschine mit einer Fehlervoraussagefunktion nach Anspruch 3, wobei die Maschinenlerneinheit (130) ein maschinelles Lernen mit einem Lernmodell zum Berechnen des Durchschnittsamplitudenspektrums unter Verwendung eines Verfahrens der kleinsten Quadrate durchführt.

**5.** Komplexe Werkzeugmaschine mit einer Fehlervoraussagefunktion nach Anspruch 4, wobei das Durchschnittsamplitudenspektrum ein quadratischer Mittelwert des interessierenden Frequenzbandes ist.

**6.** Komplexe Werkzeugmaschine mit einer Fehlervoraussagefunktion nach einem der Ansprüche 1 bis 5, wobei das interessierende Frequenzband ein erstes interessierendes Frequenzband und ein zweites interessierendes Frequenzband umfasst, welche sich voneinander in einer Mittenfrequenz unterscheiden.

**7.** Komplexe Werkzeugmaschine mit einer Fehlervoraussagefunktion nach einem der Ansprüche 1 bis 6, welche weiter eine Warneinheit (170) zum Ausgeben einer Fehlervoraussageinformation basierend auf einem Vergleichsergebnis umfasst, welches durch die Vergleichseinheit (160) beschafft wird.

**8.** Komplexe Werkzeugmaschine mit einer Fehlervoraussagefunktion nach Anspruch 7, welche weiter eine Warneinheit (170) zum Ausgeben einer Fehlervoraussageinformation basierend auf einem Vergleichsergebnis umfasst, welches durch die Vergleichseinheit beschafft wird, wobei das erste interessierende Frequenzband und das zweite interessierende Frequenzband voneinander unterschieden werden.

**Revendications**

**1.** Machine-outil complexe ayant une fonction de prédiction de défaillance comprenant :

une broche (10, 10A, 10B) adaptée pour tenir et faire tourner une pièce à usiner ? ;
une partie de vibration (50) qui est une partie cible de prédiction de défaillance étant une section de mécanisme de rotation tel qu'un roulement ou une vis à bille ;
une broche d'outil (20) adaptée pour tenir un outil qui traite la pièce de travail ; et
une unité de capteur (40) comprenant
un capteur (41) fixé à la partie de vibration (50), et
un capteur de détection de charge (43) adapté pour détecter que la pièce de travail a commencé à être traitée sur la base d'un changement d'une charge de broche ;
dans laquelle la machine-outil complexe comporte :

une unité d'analyse FFT (transformée de Fourier rapide) (112) adaptée pour réaliser une analyse de fréquence sur des informations de capteur acquises par le capteur (41) tandis que la pièce de travail tenue par la broche (10, 10A, 10B) n'est pas en cours de traitement par l'outil, et tandis que la partie de vibration (50) est mise en vibration par la broche (10, 10A, 10B) comme source vibrante dans un état de vitesse constante ;
une unité d'apprentissage automatique (130) adaptée pour acquérir un spectre d'amplitude d'une bande de fréquence d'intérêt obtenu par l'analyse de fréquence réalisée par l'unité d'analyse FFT (112), et calculer un spectre d'amplitude moyen de la bande de fréquence d'intérêt sur la base d'un modèle d'apprentissage appris ; et
une unité de comparaison (160) adaptée pour comparer le spectre d'amplitude de la bande de fréquence d'intérêt obtenu par l'unité d'analyse FFT (112) avec le spectre d'amplitude moyen de la bande de fréquence d'intérêt obtenu par l'unité d'apprentissage automatique (130).

**2.** Machine-outil complexe ayant une fonction de prédiction de défaillance telle que définie dans la revendication 1, l'unité de comparaison (160) comparant une valeur maximale dans le spectre d'amplitude de la bande de fréquence d'intérêt obtenu par l'unité d'analyse FFT (112) avec le spectre d'amplitude moyen de la bande de fréquence d'intérêt obtenu par l'unité d'apprentissage automatique (130).

**3.** Machine-outil complexe ayant une fonction de prédiction de défaillance telle que définie dans la revendication 1 ou 2, les informations de capteur étant des informations d'accélération, le spectre d'amplitude étant un spectre d'amplitude d'une densité spectrale de puissance.

**4.** Machine-outil complexe ayant une fonction de prédiction de défaillance telle que définie dans la revendication 3, l'unité d'apprentissage automatique (130) réalisant un apprentissage automatique avec un modèle d'apprentissage pour calculer le spectre d'amplitude moyen de la bande de fréquence d'intérêt en utilisant une méthode des moindres carrés.

**5.** Machine-outil complexe ayant une fonction de prédiction de défaillance telle que définie dans la revendication 4, le spectre d'amplitude moyen étant une moyenne quadratique de la bande de fréquence d'intérêt.

6. Machine-outil complexe ayant une fonction de prédiction de défaillance telle que définie dans l'une quelconque des revendications 1 à 5, la bande de fréquence d'intérêt comportant une première bande de fréquence d'intérêt et une seconde bande de fréquence d'intérêt différentes l'une de l'autre dans une fréquence centrale.

7. Machine-outil complexe ayant une fonction de prédiction de défaillance telle que définie dans l'une quelconque des revendications 1 à 6 comprenant en outre une unité d'avertissement (170) délivrant des informations de prédiction de défaillance sur la base d'un résultat de comparaison obtenu par l'unité de comparaison (160).

8. Machine-outil complexe ayant une fonction de prédiction de défaillance telle que définie dans la revendication 7 comprenant en outre une unité d'avertissement (170) délivrant des informations de prédiction de défaillance sur la base d'un résultat de comparaison obtenu par l'unité de comparaison, la première bande de fréquence d'intérêt et la seconde bande de fréquence d'intérêt étant distinguées l'une de l'autre.

# FIG. 1

# FIG. 2

# FIG. 3

# FIG. 4

FIG.5

FIG.6

# FIG. 7

ROTATIONAL SPEED COMPONENT

finner

fouter

fball

FAILURE DETERMINATION THRESHOLD

VIBRATION ACCELERATION[m/s²]

3.00
2.50
2.00
1.50
1.00
0.50
0.00

FREQUENCY[Hz]

0    200    400    600    800    1000

EP 3 413 027 B1

**EP 3 413 027 B1**

**REFERENCES CITED IN THE DESCRIPTION**

**Patent documents cited in the description**

- JP 5067121 B
- JP 3846560 B
- US 20080234964 A1
- US 20080033695 A1